Europäisches Patentamt

European Patent Office

Office européen des brevets

(19)

(11) Veröffentlichungsnummer: **0 106 001**
**A1**

(12) # EUROPÄISCHE PATENTANMELDUNG

(21) Anmeldenummer: **82810426.5**

(22) Anmeldetag: **13.10.82**

(51) Int. Cl.³: **H 02 G 3/06**

(43) Veröffentlichungstag der Anmeldung: **25.04.84**
**Patentblatt 84/17**

(84) Benannte Vertragsstaaten: **AT BE CH DE FR GB IT LI LU NL SE**

(71) Anmelder: **GEBRÜDER SULZER AKTIENGESELLSCHAFT**, Zürcherstrasse 9, CH-8401 Winterthur (CH)

(72) Erfinder: **Scherz, Christian**, Juraweg 8, CH-4922 Thunstetten (CH)
Erfinder: **Bosshard, Peter**, Nägelseestrasse 54c, CH-8406 Winterthur (CH)

(54) Verfahren zum Anschliessen von Kabelschläuchen an einen Schaltkasten z.B. einer Webmaschine und Einrichtung zur Durchführung des Verfahrens.

(57) Bei dem Anschlußverfahren der Kabelschläuche (5) an dem Schaltkasten (2) wird zuerst bei jedem Kabelschlauch (5) die Schnappmuffe (11) mittels einer federnden Befestigungsgabel (12) aufgesetzt. Darauf werden die elektrischen Kabel (22) in den Kabelschlauch (5) eingezogen und jeweils mit einem Stecker (23) bestückt. Das aus den Teilen (5, 11, 22, 23) bestehende Anschlußelement (24) wird mit dem Stecker (23) voraus in das Loch (4) der Lochplatte (3a) eingeschoben, wobei die Nasen (21) in den Ausnehmungen (27) gleiten und schließlich die Lochplatte (3a) hintergreifen.

KSR/Pat/T.612/W1NH/

Gebrüder Sulzer Aktiengesellschaft, Winterthur / Schweiz

Verfahren zum Anschliessen von Kabelschläuchen an einen
Schaltkasten z.B. einer Webmaschine und Einrichtung zur
Durchführung des Verfahrens

Die Erfindung bezieht sich auf ein Verfahren zum Anschliessen von elektrische Kabel enthaltenden Kabelschläuchen an einen Schaltkasten z.B. einer Webmaschine. Ferner bezieht sich die Erfindung auf eine Einrichtung zur Durchführung des Verfahrens.

Bei einem bisherigen Verfahren dieser Art werden zunächst die zur Befestigung der Kabelschläuche dienenden Muffen in Oeffnungen des Schaltkastens bzw. in eine mit Oeffnungen versehene Wandplatte des Schaltkastens eingeschraubt, dann werden die Kabelschläuche in die Muffen eingeführt und mit jeweils einer Befestigungsgabel in der Muffe fixiert; anschliessend werden die elektrischen Kabel in die Kabelschläuche eingezogen und an den im Schaltkasten befindlichen Kabelenden mit elektrischen Steckern bestückt. Dieses Verfahren hat den Nachteil, dass die Stecker innerhalb des Schaltkastens, nämlich nach Einziehen der Kabel in die Kabelschläuche, mit den Kabelenden verbunden werden müssen. Die angeschlossenen Stecker müssen alsdann innerhalb des Schaltkastens auf richtigen Anschluss geprüft werden.

Der Erfindung liegt die Aufgabe zugrunde, ein besonders in dieser Hinsicht verbessertes Anschlussverfahren und eine zugehörige Einrichtung zu schaffen.

Das erfindungsgemässe Verfahren besteht darin, dass zunächst jeder Kabelschlauch an dem dem Schaltkasten zugekehrten Ende mit einer Schnappmuffe versehen wird, dass dann die elektrischen Kabel in jeden Schlauch eingezogen und an ihrem dem Schaltkasten zugekehrten Ende mit elektrischen Steckern bestückt werden und dass darauf die auf diese Weise vorfabrizierten, aus Kabelschlauch, Schnappmuffe, Kabel und Stecker bestehenden Anschlusselemente mit dem Stecker voraus in Oeffnungen des Schaltkastens unter Einschnappen der Schnappmuffen eingeschoben werden. Die zugehörige Einrichtung ist dadurch gekennzeichnet, dass mindestens ein Kabelschlauch an seinem dem Schaltkasten zugekehrten Ende mit einer in die Oeffnungen des Schaltkastens passenden Schnappmuffe versehen ist, welche mit federnden Ansätzen die Schaltkasten-Oeffnungen zu hintergreifen vermag.

Durch die Erfindung wird es möglich, in Vorfabrikation einzelne, am Schaltkasten anzuschliessende Anschlusselemente herzustellen. Die Stecker lassen sich ausserhalb des Schaltkastens wesentlich leichter auf die Kabel setzen als innerhalb des Schaltkastens. Die Elemente lassen sich ferner vor dem Anschliessen am Schaltkasten der elektrischen Prüfung von Kabel und angeschlossenen Steckern unterziehen. Aufwendige Fehlersuche an den Steckern innerhalb des Schaltkastens lässt sich vermeiden. Da die eingesetzten Anschlusselemente bereits ausserhalb des Schaltkastens elektrisch geprüft werden, kann vermieden werden, dass etwa fehlerhaft montierte Anschlusselemente zwecks Richtigstellung nochmals aus dem Schaltkasten herausgenommen werden müssen.

Die Montage lässt sich leicht aufteilen in dem Sinn, dass
z.B. an einer Arbeitsstelle der vorzufabrizierenden Anschlusselemente jeweils die elektrischen Kabel in die Kabelschläuche eingezogen werden, an einer zweiten Stelle werden
die Stecker montiert und an einer dritten Stelle wird das
Anschlusselement elektrisch geprüft. Diese Prüfung kann
vor dem Anschliessen des Anschlusselementes am Schaltkasten, ausserhalb davon, und damit auf einfachere Weise
erfolgen. An einer vierten Arbeitsstelle werden schliesslich
die vorbereiteten und geprüften Anschlusselemente gesamthaft
in den Schaltkasten eingesetzt.

In der folgenden Beschreibung sind Ausführungsbeispiele
beschrieben.

Fig. 1 zeigt in vereinfachter, perspektivischer Darstellung
den elektrischen Schaltkasten einer Webmaschine,
Fig. 2 erläutert das bekannte Verfahren und die zugehörigen
Teile, in grösserem Massstab und in Explosionsdarstellung,
Fig. 3 ist ein Schnitt durch eine erfindungsgemäss ausgebildete Ausführungsform,
Fig. 4 zeigt ein zugehöriges Detail in Draufsicht und
Fig. 5 erläutert die Erfindung in einer perspektivischen
Explosionsdarstellung.

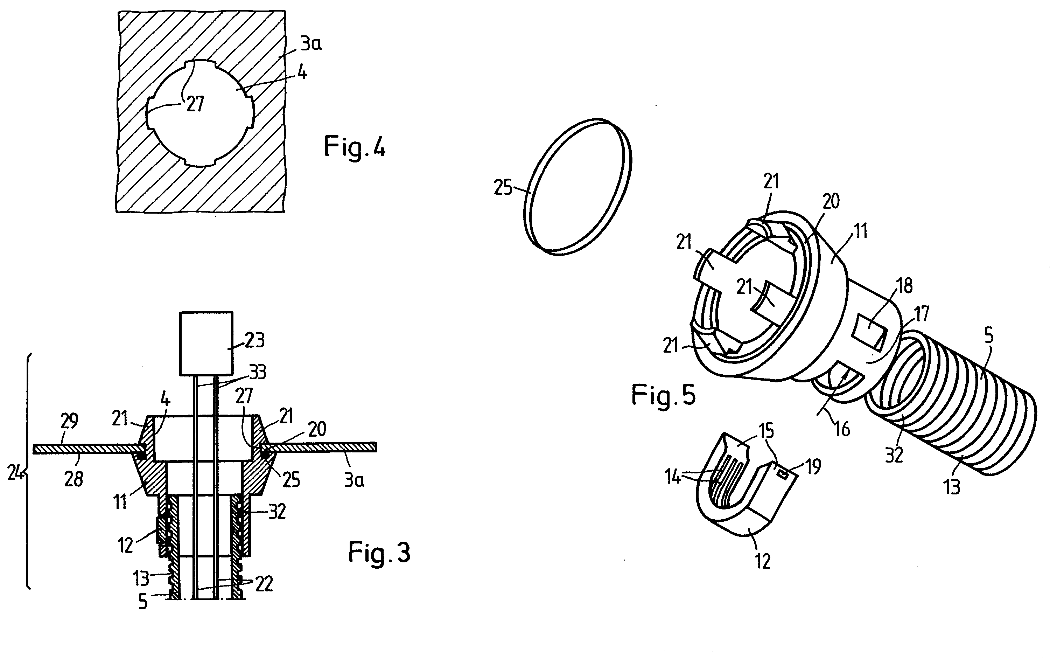

Ein als Ganzes mit 1 bezeichneter, elektrischer Schaltkasten
ist z.B. an der einen Seitenwange 35 einer Webmaschine angeordnet. Der Ksten 1 enthält die elektrischen Schaltteile
für die Webmaschine. Auf der Wand 2 ist eine Lochplatte 3
befestigt, die Durchführungsöffnungen (Löcher) 4 für Kabelschläuche 5 aufweist. In diesen Schläuchen werden die
elektrischen Zuführungskabel (vgl. Teile 22, Fig. 3) in den
Schaltkasten 1 geführt. Die Kabel sind in dem Schaltkasten 1
mit Steckern bzw. Kupplungen versehen und dadurch an wei-

- 4 -                    0106001

tere Schaltteile bzw. Aggregate der Webmaschine angeschlossen.

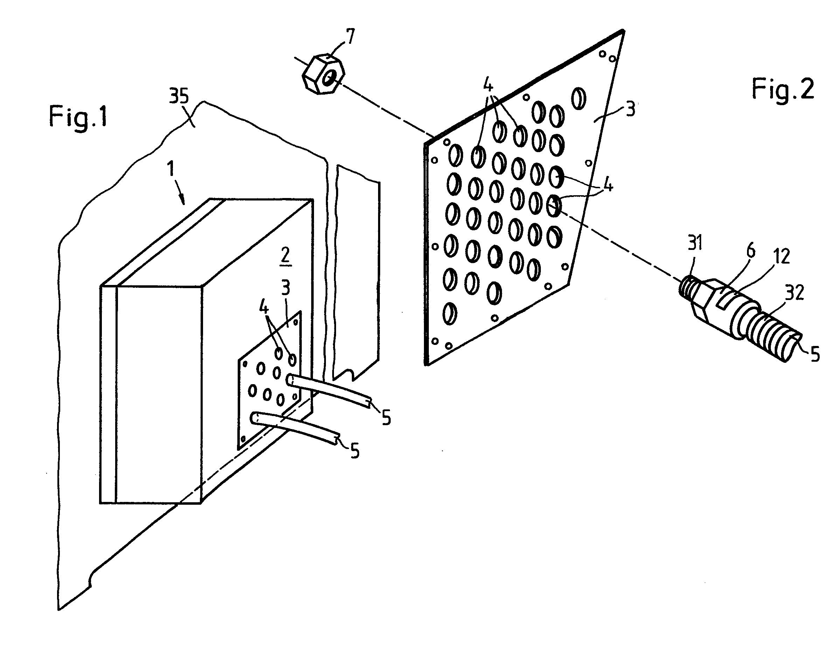

Bei dem bisherigen Verfahren entsprechend Fig. 2 werden die zu jedem Kabelschlauch 5 gehörigen, Gewinde 31 aufweisenden Befestigungsmuffen 6 in die entsprechenden Löcher 4 eingeschoben und mittels zugehöriger Muttern 7 in der Lochplatte 3 des Schaltkastens 1 befestigt. Darauf werden die Enden 32 der Schläuche 5 in die in der Lochplatte 3 sitzenden Muffen 6 eingeschoben und mit Befestigungsgabeln (vgl. Teil 12, Fig. 5) fixiert. Anschliessend werden die elektrischen Kabel in die Schläuche 5 eingezogen und darauf im Innern des Schaltkastens 2 mit elektrischen Steckern (vgl. Teil 23, Fig. 3) bestückt. Anschliessend muss die so entstandene Gesamtheit der mit Steckern bestückten Kabel innerhalb des Schaltkastens 1 einer elektrischen Prüfung auf richtigen Anschluss, Kurzschluss usw. unterzogen werden.

Bei dem erfindungsgemässen Verfahren entsprechend Fig. 3 bis 5 wird vor Einführen in den Schaltkasten 2 bei jedem Kabelschlauch 5 eine Schnappmuffe 11 auf das Ende 32 aufgesetzt und durch eine Befestigungsgabel 12 darauf fixiert. Der Schlauch 5 besitzt Rillen 13, die z.B. aus Kunststoff bestehende Gabel 12 weist in ihrem Innern entsprechende Rippen 14 auf. Die Gabel 12 wird mit ihren beiden Enden 15 gemäss Pfeil 16 in hinter den Stegen 17 gebildete Schlitze 18 eingesteckt. Jede Gabel 12 besitzt an den Enden 15 Nasen 19, die bei Eingreifstellung der Rippen 14 in den Rillen 13 hinter die Stege 17 greifen, wodurch die Gabel 12 gehalten und dadurch die Schnappmuffe 11 auf dem Schlauch 5 fixiert ist.

Nunmehr werden in jeden Kabelschlauch 5 die zugehörigen, elektrischen Kabel 22 eingezogen und an den Enden 33 mit Steckern 23 bestückt. Auf diese Weise wird ausserhalb des Schaltkastens 2 in Vorfabrikation ein Anschlusselement 24 hergestellt, welches aus dem Kabelschlauch 5, der Schnappmuffe 11, den Kabeln 22 und dem Stecker 23 besteht. Dieses Element kann ausserhalb des Schaltkastens 2 vor dem Anschliessen an diesem der elektrischen Prüfung unterzogen werden.

Schliesslich werden alle Anschlusselemente 24 mit den Enden 32,21 nacheinander in die Löcher 4 der Lochplatte 3a eingeschoben. Die Löcher 4 haben so grossen Durchmesser (z.B. 35 mm), dass die Stecker 23 hindurchgeschoben werden können, die z.B. 25 x 30 mm Querschnitt haben. Beim Einschieben legt sich jeweils die in eine Rille 20 passende Dichtung 25 der Schnappmuffe 11 gegen die Aussenfläche 28 der Lochplatte 3a. Federnde Nasen 21 der Schnappmuffe 11 werden durch entsprechende Ausnehmungen 27 der Lochplatte 3a eingeschoben. Bei genügendem Druck schnappen die Nasen 21 in die in Fig. 3 dargestellte Verriegelungsposition, in der sie die Lochplatte 3a auf der Innenfläche 29 hintergreifen.

Statt des biegsamen Kabelschlauches 5 kann auch ein steifes Kabelrohr benutzt werden. Die Teile 5,11 bestehen vorzugsweise aus Kunststoff, können aber auch —— teilweise oder ganz —— aus metallischem Werkstoff hergestellt sein.

Die Anschlusselemente 24 können z.B. an einer ersten Arbeitsstelle hergestellt und geprüft werden, während der Anschluss der Elemente 24 am Schaltkasten 1 z.B. an einer zweiten Arbeitsstelle erfolgen kann. Das Anschliessverfahren bzw. die Schnappmuffe 21 auf Schlauch 5 können auch an einer anderen Maschine mit elektrischem Schaltkasten 1 benutzt werden.

Patentansprüche

1. Verfahren zum Anschliessen von elektrische Kabel(22)enthaltenden Kabelschläuchen (5) an einen Schaltkasten (1) z.B. einer Webmaschine, dadurch g e k e n n z e i c h n e t , dass zunächst jeder Kabelschlauch (5) an dem dem Schaltkasten (2) zugekehrten Ende (32) mit einer Schnappmuffe (11) versehen wird, dass dann die elektrischen Kabel (22) in jeden Schlauch (5) eingezogen und an ihrem dem Schaltkasten (1) zugekehrten Ende (33) mit elektrischen Steckern (23) bestückt werden und dass darauf die auf diese Weise vorfabrizierten, aus Kabelschlauch (5), Schnappmuffe (11), Kabel (22) und Stecker (23) bestehenden Anschlusselemente (24) mit dem Stecker (23) voraus in Oeffnungen (4) des Schaltkastens (1) unter Einschnappen der Schnappmuffen (11) eingeschoben werden.

2. Einrichtung, insbesondere zur Durchführung des Verfahrens nach Anspruch 1, dadurch gekennzeichnet, dass mindestens ein Kabelschlauch (5) an seinem dem Schaltkasten (1) zugekehrten Ende (32) mit einer in die Oeffnungen (4) des Schaltkastens (1) passenden Schnappmuffe (11) versehen ist, welche mit federnden Ansätzen (21) die Schaltkasten-Oeffnungen (4) zu hintergreifen vermag.

3. Einrichtung nach Anspruch 2, dadurch gekennzeichnet, dass die Schaltkasten-Oeffnungen (4) so gross sind, dass die Stecker (23) der Anschlusselemente (24) durch sie hindurchschiebbar sind.

4. Einrichtung nach den Ansprüchen 2 und 3, dadurch gekennzeichnet, dass jede Schnappmuffe (11) eine auf dem Umfang der Kabelschläuche (5) aufsteckbare Haltegabel (12) aufweist, welche mittels Rippen (14) in auf dem Kabelschlauchumfang angebrachte Rillen (13) eingreift.

0106001

5. Einrichtung nach den Ansprüchen 2 - 4, dadurch gekennzeichnet, dass die Schnappmuffe (11) eine sich gegen die
Aussenfläche (28) des Schaltkastens (1) legende Dichtung (25)
enthält.

Fig.1

Fig.2

Fig.5

Fig.4

Fig.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X,Y | US-A-4 198 537 (MARIANI)<br>* Spalte 4, Zeilen 27-47; Figur 10 * | 1-5 | H 02 G 3/06 |
| Y | GB-A-1 406 037 (RISTS)<br>* Seite 2, Zeilen 22-33; Figur 1 * | 1-3,5 | |
| Y | FR-A-2 217 825 (RISTS)<br>* Seite 2, Zeilen 14-26; Figuren * | 1-3 | |
| Y | US-A-2 475 574 (TAYLOR)<br>* Spalte 3, Zeilen 20-61; Figuren 4,5 * | 1,4 | |

RECHERCHIERTE SACHGEBIETE (Int. Cl. 3)

H 02 G 3/00
H 01 R 13/00

Der vorliegende Recherchenbericht wurde für alle Patentansprüche erstellt.

| Recherchenort | Abschlußdatum der Recherche | Prüfer |
|---|---|---|
| DEN HAAG | 29-06-1983 | TIELEMANS H.L.A. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82